**Europäisches Patentamt**

**European Patent Office**

**Office européen des brevets**

(19)

(11) Veröffentlichungsnummer:

**0 019 664**
A2

# (12) EUROPÄISCHE PATENTANMELDUNG

(21) Anmeldenummer: **79105105.5**

(51) Int. Cl.³: **H 04 Q 3/42**

(22) Anmeldetag: **12.12.79**

(30) Priorität: **26.01.79 CH 800/79**

(71) Anmelder: **SIEMENS-ALBIS AKTIENGESELLSCHAFT, EGA1/Verträge und Patente Postfach, CH-8047 Zürich (CH)**

(43) Veröffentlichungstag der Anmeldung: **10.12.80 Patentblatt 80/25**

(72) Erfinder: **Oswald, Ernst, Krokusstrasse 2, CH-8953 Dietikon (CH)**

(84) Benannte Vertragsstaaten: **DE NL**

(54) Schaltungsanordnung für eine Fernmelde-, insbesondere Fernsprechvermittlungsanlage mit Wahlstufen.

(57) Die Schaltungsanordnung ermöglicht, auch ältere direktgesteuerte Fernmeldeanlagen in einfacher Weise nachträglich mit neuen Leistungsmerkmalen, wie sie moderne Systeme dank speicherprogrammierbarer Steuerung aufweisen, auszustatten. Dabei wird für die Dauer des Verbindungsaufbaus ein elektronisches, durch eine programmierbare Steuereinrichtung (RST) gesteuertes Register (R) in den Verbindungsabschnitt zwischen dem betreffenden Anrufsucher (AS) bzw. Vorwähler und dem zugeordneten Wähler (GW) der nachfolgenden Wahlstufe eingeschlauft. Dazu ist jedem Wähler (GW) dieser Wahlstufe ein Anlassorgan (C) sowie ein Umschaltekontakt (b) im genannten Verbindungsabschnitt betätigendes Trennorgan (B) zugeordnet, die nach Anforderung durch einen eine Verbindung wünschenden Teilnehmer über eine Anschalteeinrichtung (AW) die Einschlaufung eines Registers (R) in den erwähnten Verbindungsabschnitt veranlassen. Der Verbindungsaufbau wird hierauf von diesem Register (R) aus gesteuert.

- 1 -

## Schaltungsanordnung für eine Fernmelde-, insbesondere Fernsprech-vermittlungsanlage mit Wahlstufen

Die vorliegende Erfindung betrifft eine Schaltungsanordnung für Fernmelde-, insbesondere Fernsprechvermittlungsanlagen mit schritthaltendem Verbindungsaufbau über Wahlstufen, wobei die von einem Teilnehmer zum Aufbau einer Verbindung abgegebene Wahlinformation einer Empfangseinrichtung zugeführt, ausgewertet und dann zum Aufbau einer Verbindung ausgegeben wird.

Moderne Fernmelde-, insbesondere Fernsprechvermittlungsanlagen weisen im Vergleich zu älteren Systemen eine Vielzahl von Leistungsmerkmalen auf, die nur dank speicherprogrammierter Steuerung mit einem vernünftigen Aufwand zu realisieren sind. Solche Leistungsmerkmale sind u.a. Tonfrequenzwahl, Mehrfrequenzcode(MFV)-Signalisierung, Teilnehmeridentifizierung, Teilnehmerklassifizierung (Teilnehmerberechtigung), Kurzrufnummernwahl, Anrufumleitung. Diese für den Benützer bzw. für den Besitzer der Vermittlungsanlage interessanten Leistungsmerkmale gestatten eine bessere Ausnutzung der Anlage und eröffnen zudem neue Betriebsmöglichkeiten. Es besteht daher der Wunsch, auch ältere Systeme soweit wie möglich mit solchen neuen Leistungsmerkmalen zu ergänzen und damit deren Leistungsfähigkeit zu erhöhen. Dies ist jedoch aus wirtschaftlichen Gründen nur dann sinnvoll, wenn eine diesbezügliche Modernisierung älterer Systeme mit möglichst geringem Aufwand und wenig Eingriffen in das bestehende System vorgenommen werden kann. Dabei stehen Direktwahlsysteme im Vordergrund, d.h. Systeme, bei denen der Aufbau einer Verbindung weitgehend mit der Wahl des Teilnehmers Schritt hält, wobei der Verbindungsaufbau jeweils von Wahlstufe zu Wahlstufe erfolgt.

Ziel der vorliegenden Erfindung ist es, eine Schaltungsanordnung anzugeben, die die Einführung von zusätzlichen Leistungsmerkmalen in einer direktgesteuerten Fernmeldevermittlungsanlage mit einem geringen Aufwand gestattet. Dies wird erfindungsgemäss dadurch erreicht, dass jedem Wähler der ersten Wahlstufe ein Anlassorgan sowie ein Umschaltekontakte im Verbindungsabschnitt zwischen dem Wähler und dem angeschlossenen Anrufsucher bzw. Vorwähler betätigendes Trennorgan zugeordnet ist, die nach erfolgter Anforderung durch einen eine Verbindung wünschenden Teilnehmer über eine Anschalteeinrichtung die Einschlaufung eines Empfangs- und Sendeeinrichtungen für Impulswahl- und Mehrfrequenzcode-Schaltkennzeichen aufweisenden und mit einer Steuereinrichtung verbundenen Registers für die Dauer des Verbindungsaufbaus in den betreffenden genannten Verbindungsabschnitt veranlassen, und dass der Aufbau der Verbindung sowie die Speisung und Ueberwachung des rufenden Teilnehmers wie auch die Belegung des entsprechenden Wählers während der Anschaltung des Registers von diesem aus erfolgt.

Bei der erfindungsgemässen Anordnung wird also bei jedem Verbindungsaufbau ein Register lediglich für die Zeit des Aufbaus der Verbindung eingeschlauft und kann dann nach dessen Beendigung wieder einem anderen eine Verbindung wünschenden Teilnehmer zugeordnet werden. Unter einem Register soll eine Einrichtung verstanden werden, die im Zusammenwirken mit einer Steuereinrichtung dazu dient, zum Aufbau einer Verbindung notwendige Informationen aufzunehmen, zu speichern, für den Verbindungsaufbau zu verarbeiten und/oder wieder abzugeben. Dadurch, dass während des Verbindungsaufbaus einerseits die Sprechwege eines rufenden Teilnehmers direkt mit dem zugeteilten Register verbunden sind und anderseits dieses Register ausgangsseitig mit dem entsprechenden Wähler der nachfolgenden Wahlstufe verbunden ist, können die vom Teilnehmer abgegebenen Wahlinformationen wie auch der Signalisierung dienende Kennzeichen ohne Aufwand an weiteren Schaltmitteln direkt ins Register gelangen, dort gegebenenfalls verarbeitet, erforderlichenfalls umgesetzt und hierauf zur Steuerung des Verbindungsaufbaus wieder ausgegeben werden. Der Schaltungsaufwand für die erfindungsgemässe Anschaltung des Registers ist sehr gering; ebenso sind nur geringfügige Eingriffe in ein bereits bestehendes System notwendig.

Anhand einer Zeichnung wird die Erfindung nachfolgend beispielsweise näher erläutert. Es zeigt:

Fig. 1 die erfindungsgemässe Anordnung in einer Fernmeldevermittlungsanlage,

Fig. 2 Einzelheiten dieser Anordnung.

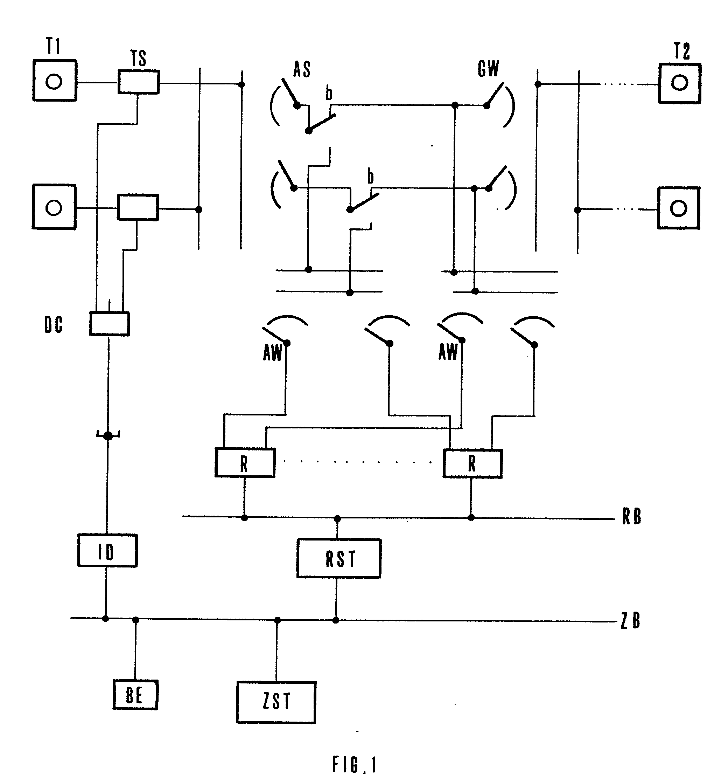

In Fig. 1 sind Teile einer Vermittlungsanlage mit schritthaltendem Verbindungsaufbau dargestellt, soweit sie für das Verständnis der Erfindung von Bedeutung sind. Diese Anlage basiert auf dem bekannten Anrufsucher-Prinzip; die Erfindung ist jedoch ohne weiteres auch in Vorwähler-Systemen anwendbar. Jeder angeschlossene Teilnehmer T1 ist über seine Teilnehmerschaltung TS und eine Vielfachschaltung mit je einem Eingang von Anrufsuchern AS verbunden, die ihrerseits je auf einen Wähler GW einer nachfolgenden ersten Wahlstufe führen. Die Ausgänge dieser Wähler GW sind über Wähler weiterer Wahlstufen mit den Anschlüssen anzurufender Teilnehmer T2 verbunden. In jedem Verbindungsabschnitt zwischen einem Anrufsucher AS und einem Wähler GW der ersten Wahlstufe sind Umschaltekontakte b vorgesehen, bei deren Betätigung die Verbindung zwischen dem betreffenden Anrufsucher AS und dem entsprechenden Wähler GW unterbrochen und dieser Anrufsucher AS mit einem Ausgang eines Anschaltewählers AW verbunden wird. Der Anschaltewähler AW ist seinerseits mit dem Eingang eines zugeordneten elektronischen Registers R verbunden. Die Anzahl der vorhandenen Register R und damit auch die Anzahl der Anschaltewähler AW richtet sich nach dem in der Vermittlungsanlage zu erwartenden Verkehrsaufkommen. Der Ausgang des Registers R ist mit weiteren Schaltarmen des Anschaltewählers AW verbunden und über diese direkt mit dem Eingang des zugeordneten Wählers GW der nachfolgenden Wahlstufe verbindbar.

Mehrere Register R werden von einer z.B. mit einem Mikroprozessor aufgebauten Steuereinrichtung RST gesteuert. Sie sind über eine Busleitung RB mit dieser Steuereinrichtung verbunden. Die Register R sind impulswahlfähig sowie für den Empfang und das Aussenden von Tonfrequenzzeichen ausgerüstet, ferner können sie sowohl MFV-Vorwärtszeichen als auch MFV-Rücksignale empfangen bzw. aussenden. Damit können in der Vermittlungsanlage verschiedene Arten von Wahl- und Signalisierverfahren angewendet werden. Die Steuereinrichtung RST steht über eine zentrale Busleitung ZB mit einer speicherprogrammierbaren zentralen Steuereinrichtung ZST in Verbindung; über diese Busleitung ZB erfolgt der Informations-Austausch zwischen diesen beiden Steuereinrichtungen. In der zentralen Steuereinrichtung ZST ist u.a. die vollständige Umwerteliste für das betreffende Vermittlungsamt sowie die Kurzrufnummernliste der entsprechend berechtigten Teilnehmer in einem Datenspeicherbereich abgelegt. Diese Listen können durch Zugriff über eine Bedienungseinheit BE beliebig geändert werden.

Die Vermittlungsanlage kann ferner mit einer Einrichtung zum Identifizieren von anrufenden Teilnehmern ausgerüstet sein. Dazu sind die Teilnehmerschaltungen TS gruppenweise mit einem Codierer DC verbunden, der seinerseits mit einem Identifizierer ID verbunden ist. Der Identifizierer ID steht über die Busleitung ZB mit der zentralen Steuereinrichtung ZST in Verbindung.

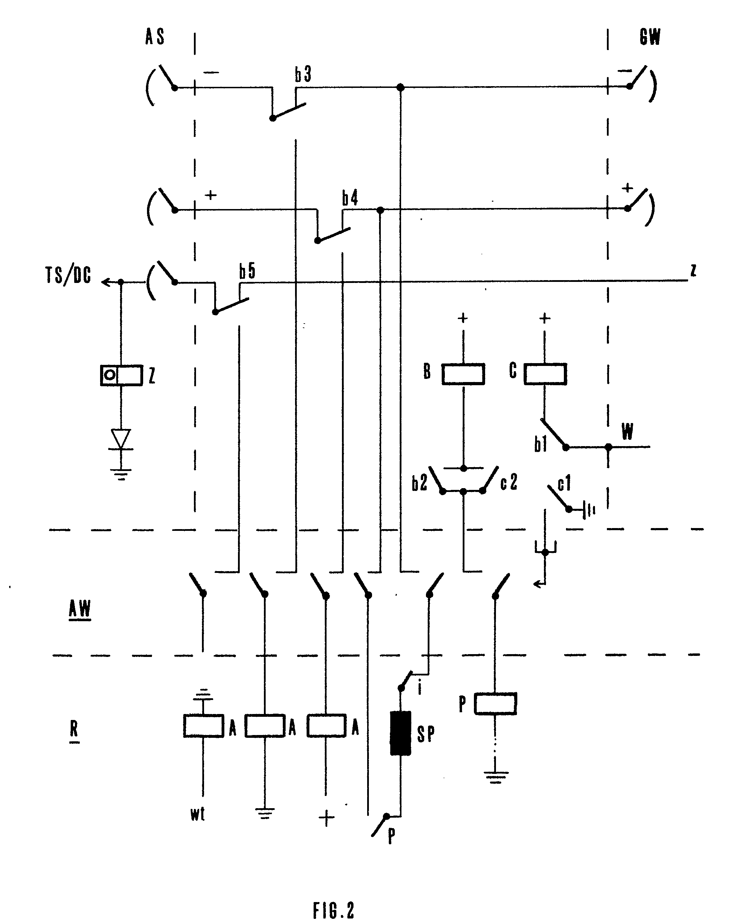

Weitere Einzelheiten der Erfindung werden aus der nachfolgenden Beschreibung eines Verbindungsaufbaus anhand von Fig. 2 ersichtlich. In Fig. 2 ist von der in Fig. 1 gezeigten Vermittlungsanlage lediglich noch der zwischen einem Anrufsucher AS und dem zugeordneten Wähler GW der angeschlossenen Wahlstufe verlaufende zweiadrige Sprechweg sowie eine Zählader z dargestellt. In jeder Ader dieses Abschnittes ist ein Umschaltekontakt b eingefügt. Sobald ein Teilnehmer T1 seinen Handapparat abhebt, um eine Verbindung aufzubauen, wird die entsprechende Teilnehmerleitungsschleife geschlossen. Dadurch läuft ein Anrufsucher AS an und sucht die Leitung des rufenden Teilnehmers. Sobald der Anrufsucher AS diese Leitung gefunden hat, bleibt er stehen, wodurch der Teilnehmer mit dem Wähler GW verbunden wird. Dieser Wähler GW übernimmt die Speisung des rufenden Teilnehmers und veranlasst die Anschaltung des Wähltones als Aufforderung zum Wahlbeginn.

Der Wählton wt wird nun in der vorliegenden Anordnung nicht in üblicher Weise direkt vom Wähler GW über die Sprechadern zum rufenden Teilnehmer übertragen. Er wird vielmehr einer zusätzlichen Wicklung eines Speise- und Ueberwachungsrelais A im Register R zugeführt. Jedem Wähler GW der ersten Wahlstufe sind zwei Relais B und C zugeordnet. Sobald der Wähler GW die Aufforderung "Wählton anlegen" abgibt, wird über den Anschluss W und den geschlossenen Ruhekontakt b1 das Relais C zum Ansprechen gebracht. Mit dem Schliessen des Kontaktes c1 wird der einem momentan nicht belegten Register R zugeordnete Anschaltewähler AW in Gang gesetzt. Ueber den geschlossenen Kontakt c2 ist der anlassende Wähler GW markiert. Mit Hilfe des Prüfrelais P im Register R wird auf den markierten Wähler GW aufgeprüft. Sobald der angelassene Anschaltewähler AW diesen Wähler GW gefunden hat, werden die Schaltarme des Anschaltewählers AW durch Aufziehen des Prüfrelais P stillgesetzt. Ueber den gleichen Stromkreis wird das Relais B erregt und dabei der Ruhekontakt b1 geöffnet.

Demzufolge öffnen die Kontakte c1 und c2 durch Abfall des Relais C. Das Relais B hält sich über den Kontakt b2. Ueber die umgeschalteten Kontakte b3, b4 im Abschnitt zwischen dem Anrufsucher AS und dem zugeordneten Wähler GW sind die Sprechadern des rufenden Teilnehmers nun mit dem Register R verbunden. Der Wählton wt kann über die erwähnte zusätzliche Wicklung des Relais A im Register R zum rufenden Teilnehmer gelangen, der damit zum Aussenden der Wahlinformation aufgefordert wird. Die Speisung und Ueberwachung des rufenden Teilnehmers erfolgt nach der Anschaltung des Registers R durch das Relais A. Das Relais A veranlasst nach Feststellung des Eintreffens der ersten Wahlziffer auch die Abschaltung des Wähltones wt. Ausgangsseitig ist das Register R über einen eine Spule SP und Kontakte i und p enthaltenden Stromkreis mit dem Wähler GW verbunden. Ueber diesen Stromkreis erfolgt auch die Belegung und Ueberwachung des Wählers GW in der nachfolgenden Wahlstufe durch nicht weiter dargestellte Schaltmittel.

Gleichzeitig mit der Belegung eines Registers R kann durch die Steuereinrichtung RST und die über einen Schaltarm des Anschaltewählers AW sowie einen Umschaltekontakt b5 an das Register R angeschaltete Zähtader z (mit angeschlossenem Gebührenzähler Z) eine Anforderung zur Identifizierung des die Verbindung aufbauenden Teilnehmers durch die in Fig. 1 skizzierte Identifiziereinrichtung ID veranlasst werden. In bekannter Weise wird über einen Identifizierkreis und einen Codierer DC die Teilnehmernummer ermittelt und durch Vergleich mit einer Klassentabelle im Identifizierer ID die Teilnehmerberechtigung festgestellt. Teilnehmernummer und Teilnehmerberechtigung werden hierauf an die Steuereinrichtung RST übertragen und dort abgespeichert. Aufgrund dieser Daten und der vom Teilnehmer abgegebenen Wahlinformationen ist es nun möglich, zu überprüfen, ob der wählende Teilnehmer überhaupt berechtigt ist, die gewünschte Verbindung aufzubauen. Ist dies nicht der Fall, wird im Register R der Aufbau der Verbindung verhindert und dem betreffenden Teilnehmeranschluss beispielsweise ein Besetztton aus dem Register R zugeführt. Die ermittelte Teilnehmernummer kann überdies der Gebührenermittlung dienenden Einrichtungen zugeführt werden.

Die vom Teilnehmer TN abgegebene Wahlinformation wird im eingeschlauften Register R durch an sich bekannte Einrichtungen aufgenommen und ausgewertet. Impulswahlzeichen werden über den Ruhekontakt i an die angeschlossenen Wahlstufen abgegeben. Im Falle von vom Teilnehmer abgegebenen Tonfrequenzzeichen werden diese im Register R gespeichert, umgesetzt und in Form von Impulswahlzeichen über den Impulskontakt i wieder abgegeben. Stellt die Steuereinrichtung RST aufgrund einer Kennzahlauswertung fest, dass die gewünschte Verbindung nach der ersten Wahlstufe nach dem Mehrfrequenzcode-Verfahren aufgebaut werden kann, bleibt der Kontakt i im betreffenden Register R nach Einstellung des ersten Wählers GW geschlossen und die restliche Wahlinformation wird in Form von MFV-Zeichen über die Spule SP abgegeben.

Wie erwähnt, erfolgt nach Anschaltung des Registers R die Ueberwachung des rufenden Teilnehmers und der abgehenden Verbindung vom Register R aus. Wenn der Verbindungsversuch abzubrechen ist, z.B. weil der rufende Teilnehmer seinen Handapparat auflegt oder weil alle in Frage kommenden Leitungen belegt sind oder weil der angerufene Teilnehmer besetzt ist, dann wird dies im Register R festgestellt, von wo aus dann die entsprechenden Vorgänge, wie Abschaltung des Registers R oder die Aussendung eines Besetztzeichens zum rufenden Teilnehmer eingeleitet werden. Wenn die gewünschte Verbindung hingegen durchgeschaltet werden kann, wird das Register R ohne weitere Steuervorgänge abgetrennt. Ueber die Kontakte b3, b4 sind die beiden Teilnehmer dann miteinander verbunden. Die Speisung und Ueberwachung der beiden Teilnehmer erfolgt in bekannter Weise wieder durch in den Wahlstufen bereits vorhandene Schaltmittel.

26.1.1979
79/9802 EGA1/Wä

Patentansprüche
────────────

1. Schaltungsanordnung für Fernmelde-, insbesondere Fernsprechvermittlungsanlagen mit schritthaltendem Verbindungsaufbau über Wahlstufen, wobei die von einem Teilnehmer zum Aufbau einer Verbindung abgegebene Wahlinformation einer Empfangseinrichtung zugeführt, ausgewertet und dann zum Aufbau einer Verbindung ausgegeben wird, dadurch gekennzeichnet, dass jedem Wähler (GW) der ersten Wahlstufe ein Anlassorgan (C) sowie ein Umschaltekontakte (b) im Verbindungsabschnitt zwischen dem Wähler (GW) und dem angeschlossenen Anrufsucher (AS) bzw. Vorwähler betätigendes Trennorgan (B) zugeordnet ist, die nach erfolgter Anforderung durch einen eine Verbindung wünschenden Teilnehmer über eine Anschalteeinrichtung (AW) die Einschlaufung eines Empfangs- und Sendeeinrichtungen für Impulswahl- und Mehrfrequenzcode-Schaltkennzeichen aufweisenden und mit einer Steuereinrichtung (RST) verbundenen Registers (R) für die Dauer des Verbindungsaufbaus in den betreffenden genannten Verbindungsabschnitt veranlassen, und dass der Aufbau der Verbindung sowie die Speisung und Ueberwachung des rufenden Teilnehmers wie auch die Belegung des entsprechenden Wählers (GW) während der Anschaltung des Registers (R) von diesem aus erfolgt.

2. Schaltungsanordnung nach Anspruch 1, dadurch gekennzeichnet, dass bei einer dem zu erwartenden Verkehrsaufkommen entsprechenden Anzahl von Registern (R) jedem dieser Register (R) ein Anschaltewähler (AW) zugeordnet ist, der bei Anforderung seines zugehörigen freien Registers (R) durch das Anlassorgan (C) eines Wählers (GW) aktiviert wird, auf eine den betreffenden Wähler (GW) kennzeichnende Markierung aufprüft und nach Auflaufen auf diese Markierung stillgesetzt wird und dabei das Register (R) einerseits direkt mit diesem Wähler (GW) und andererseits über die den genannten Verbindungsabschnitt gleichzeitig mit der Stillsetzung des Anschaltewählers (AW) auftrennenden Umschaltekontakte (b3, b4 ....) mit dem entsprechenden Anrufsucher (AS) verbindet.

3. Schaltungsanordnung nach Anspruch 2, dadurch gekennzeichnet, dass das Anforderungssignal für die Anschaltung eines freien Registers (R) aus dem Anschaltesignal für das Wählzeichen in der ersten Wahlstufe gewonnen und dem Anlassorgan (C) zugeführt wird.

0019664

FIG.1

FIG.2